# EUROPEAN PATENT APPLICATION

(11) **EP 4 825 648 A1**
(43) Date of publication of application: **21.10.2026**
(21) Application number: 25845240.8
(22) Date of filing: 18.07.2025
(51) Int. Cl.: B60L 53/80, B60L 53/60, B60L 53/30

(54) **BATTERY EXCHANGE DEVICE AND METHOD FOR CONTROLLING SAME**

(30) Priority: 24.07.2024 KR 20240098000
(71) Applicant: LG Energy Solution, Ltd., Seoul 07335 (KR)
(72) Inventor: HONG, Sukmin, Daejeon 34122 (KR); KIM, Joohee, Daejeon 34122 (KR); PARK, Chanwoo, Daejeon 34122 (KR); PARK, Hyunyong, Daejeon 34122 (KR); LIM, Geonhyeok, Daejeon 34122 (KR); CHOI, Jin Hyouk, Daejeon 34122 (KR)
(74) Representative: BCKIP Part mbB
(86) International application number: PCT/KR2025/010642
(87) International publication number: WO 2026/024006

(57) **Abstract**

Disclosed are a battery exchange device and a control method therefor. The battery exchange device comprises: a plurality of charging slots; a transceiver; a plurality of sensors disposed in one area of the plurality of charging slots; a memory storing instructions; and a processor connected to the memory. The processor is configured to: on the basis of at least one of location information about a first device or device information about the first device, check whether the first device is stopped within a predefined distance from the battery exchange device; acquire information measured via at least one sensor disposed in one area of a first charging slot among the plurality of charging slots when the first device is stopped within the predefined distance from the battery exchange device; and determine, on the basis of the information measured via the at least one sensor, whether to open a door of the first charging slot.

## Description

### Technical Field

The present disclosure relates to a battery exchange device and method for controlling same.

### Background Art

Technology related to a battery swapping station (BSS) of an electric two-wheeled vehicle is developed to reduce a charging time of an electric two-wheeled vehicle. The BSS is a technology for allowing a battery pack required for an electric two-wheeled vehicle to be quickly replaced in order to help a user of an electric two-wheeled vehicle quickly resume operation without a long charging waiting time, and, recently, standardized battery sizes and interfaces are adopted to increase compatibility among electric two-wheeled vehicles of various manufacturers. In relation thereto, various attempts for stably operating the BSS are being progressed by increasing convenience of users in receiving and releasing processes of a battery pack for swapping batteries, and guaranteeing reliability in swapping batteries.

### Detailed Description of the Invention

### Technical Goals

Provided in various embodiments of the present disclosure are a battery swapping device and a controlling method thereof. Specifically, an objective of the various embodiments of the present disclosure is to provide a controlling method for providing a battery swapping service which is more convenient for a user by a primary authentication process of starting a preparation for swapping a battery without a separate and additional authentication device based on location information (e.g., global positioning system (GPS) information) of an electric two-wheeled vehicle, and a secondary authentication process of deciding whether a battery is correctly mounted on a battery swapping device.

The technical goals aimed by example embodiments of the present disclosure are not limited to the technical goals as described above, and other technical goals may be derived from the following example embodiments.

### Technical solutions

According to an example embodiment, a battery swapping device includes a plurality of charging slots, a transceiver, a plurality of sensors arranged at one area of the plurality of charging slots, a memory storing an instruction, and a processor connected to the memory, with the processor being configured to identify, based on at least one of location information of a first device and device information of the first device, whether the first device is in a state of having stopped within a pre-defined distance from the battery swapping device, acquire, in a case in which the first device is in the state of having stopped within the pre-defined distance from the battery swapping device, information measured through at least one sensor arranged at one area of a first charging slot among the plurality of charging slots, and determine, based on the information measured through the at least one sensor, whether to open a door of the first charging slot.

The processor is configured to receive information that the first device is located within the pre-defined distance from the battery swapping device from a server through the transceiver, and receive information indicating that the first device is in the state of having stopped within the pre-defined distance from the server through the transceiver.

The processor is configured to receive a first signal for a communication connection broadcasted by the first device through the transceiver, decide, based on the received first signal, that the first device is located within the pre-defined distance from the battery swapping device, receive a second signal including the device information of the first device from the first device through the transceiver, and decide, based on the device information of the first device, that the first device is in the state of having stopped within the pre-defined distance from the battery swapping device.

The processor is configured to receive the location information of the first device and the device information of the first device from a server through the transceiver, decide, based on the location information of the first device, whether the first device is located within the pre-defined distance from the battery swapping device, and decide, based on the device information of the first device, whether the first device has stopped within the pre-defined distance from the battery swapping device.

The one area of the first charging slot includes a first area, a second area arranged to be connected to the first area, a third area arranged to be connected to the second area, and to face the first area, and a fourth area arranged to be connected to the first area and the third area, and to face the second area, and the at least one sensor includes a first sensor located in the first area, a second sensor located in the second area, a third sensor located in the third area, and a fourth sensor located in the fourth area.

The at least one sensor includes at least one proximity-illuminance sensor, and the information measured through the at least one sensor includes brightness information and distance information to a first battery pack, which are measured by each of the at least one proximity-illuminance sensor.

The processor is configured to compare, with respect to each of the at least one proximity-illuminance sensor, predetermined reference brightness information and reference distance information respectively to measured brightness information and distance information, decide, with respect to each of the at least one proximity-illuminance sensor, whether a result of the comparing satisfies a predetermined condition, and decide, based on whether a number of the at least one proximity-illuminance sensor satisfying the predetermined condition is equal to or greater than a predetermined number, whether the first battery pack is located at the one area of the first charging slot.

The processor is configured to, in a case of having decided that the first battery pack is located at the one area of the first charging slot, open the door of the first charging slot.

The processor is configured to, in a case of having decided that the first battery pack is not located at the one area of the first charging slot, close the door of the first charging slot.

The processor is configured to, in a case of having identified that a first battery pack is normally received after the door of the first charging slot is opened, charge the first battery pack.

The processor is configured to determine, in a case of having identified that a first battery pack is normally received after the door of the first charging slot is opened, a second battery pack based on state information of each of a plurality of battery packs received in a portion of the plurality of charging slots, and control a second charging slot at which the second battery pack is located to release the second battery pack.

The processor is configured to, in a case in which the second battery pack is released, close a door of the second charging slot.

The device information of the first device includes at least one of identification information of the first device, speed information of the first device, and starting state information of the first device, and the identification information of the first device is pre-registered on a database of a server.

According to an example embodiment, a controlling method of a battery swapping device includes identifying, based on at least one of location information of a first device and device information of the first device, whether the first device is in a state of having stopped within a pre-defined distance from the battery swapping device, acquiring, in a case in which the first device is in the state of having stopped within the pre-defined distance from the battery swapping device, information measured through at least one sensor arranged at one area of a first charging slot among the plurality of charging slots, and determining, based on the information measured through the at least one sensor, whether to open a door of the first charging slot.

Specific details of other example embodiments are included in detailed descriptions and drawings.

### Effects of the Invention

According to the disclosed example embodiments, it is possible to expect one or more of the following effects.

According to an example embodiment of the present disclosure, provided is a battery swapping service which is more convenient for a user by a primary authentication process of starting a preparation for swapping a battery without a separate and additional authentication device based on device information and location information (e.g., GPS information) of an electric two-wheeled vehicle, and a secondary authentication process of deciding whether a battery is correctly mounted on a battery swapping device.

Further, according to an example embodiment of the present disclosure, provided is a battery swapping service which does not require high maintenance and management costs for a sensor in a battery swapping device because, unlike a method of performing authentication through various methods such as quick response (QR), near-field communication (NFC), and radio frequency identification (RFID) card tagging, it is not necessary for a service provider, providing the battery swapping service, to be equipped with a separate authentication means other than the battery swapping device.

The effects to be obtained in the present disclosure are not limited to the aforementioned effects, and other effects not mentioned herein will be clearly understood by those skilled in the art from the description of claims.

### Brief Description of Drawings

FIG. 1 is a drawing for illustrating a battery swapping system according to an example embodiment.
FIG. 2 is a block diagram for illustrating a configuration of a battery swapping device according to an example embodiment.
FIG. 3 is a drawing for illustrating a process of deciding a state of a first device according to an example embodiment.
FIG. 4a to FIG. 4c are drawings for illustrating a process of a battery swapping device controlling a charging slot for swapping a battery pack according to an example embodiment.
FIG. 5 is a drawing for illustrating a controlling method of a battery swapping device according to an example embodiment.

### Mode for Carrying Out the Invention

Terms used in the example embodiments are selected from currently widely used general terms when possible while considering the functions in the present disclosure. However, the terms may vary depending on the intention of a person skilled in the art, precedents, the emergence of new technology, and the like. Further, in certain cases, there are also terms arbitrarily selected by the applicant, and, in these cases, the meaning will be described in detail in the corresponding descriptions. Therefore, the terms used in the present disclosure should be defined based on the meaning of the terms and the contents of the entire present disclosure, rather than the simple names of the terms.

Throughout the specification, when a part is described as "comprising or including" a component, it does not exclude another component but may further include another component unless otherwise stated.

The expression "at least one of a, b, or c" described throughout the specification may include "a alone," "b alone," "c alone," "a and b," "a and c," "b and c," or "all of a, b, and c."

A "terminal" referred to hereinafter may be implemented as a computer or a portable terminal capable of accessing a server or another terminal through a network. Here, the computer may include, for example, a notebook, a desktop computer, and/or a laptop computer which are equipped with a web browser. The portable terminal may be a wireless communication apparatus ensuring portability and mobility and include (but is not limited to) any type of handheld wireless communication apparatus, for example, a tablet PC, a smartphone, or a communication-based terminal such as international mobile telecommunication (IMT), code division multiple access (CDMA), W-code division multiple access (W-CDMA), and long term evolution (LTE).

In the following description, example embodiments of the present disclosure will be described in detail with reference to the accompanying drawings so that those skilled in the art to which the present disclosure pertains may easily implement the example embodiments of the present disclosure. However, the present disclosure may be implemented in many different forms and is not limited to the example embodiments described herein.

Hereinafter, example embodiments of the present disclosure will be described in detail with reference to the drawings.

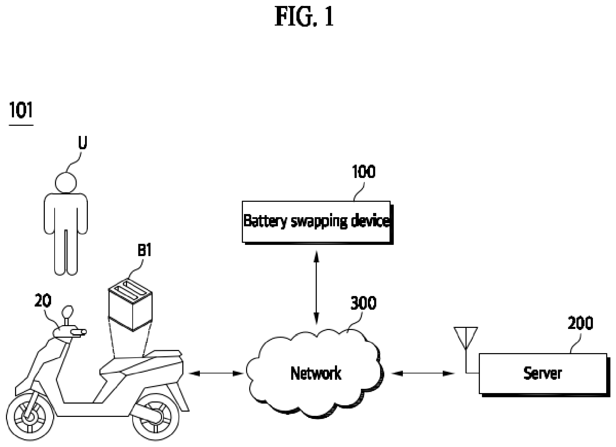

FIG. 1 is a drawing for illustrating a battery swapping system according to an example embodiment.

Referring to FIG. 1, a battery swapping system 101 may include a battery swapping device 100, a server 200, a network 300 and a first device 20 including a first battery pack B1. Hereinafter, although the first device 20 is illustrated as an electric two-wheeled vehicle, an example embodiment of the present disclosure may be applied to various electric mobility devices driven by a rechargeable battery pack, and an example embodiment of the first device 20 including the first battery pack B1 is not limited to a specific case. The first device 20 may correspond to a device which is operated by being linked to a battery swapping service which allows the first battery pack B1 which is used to be received in the battery swapping device 100 before being swapped for a charged battery pack through the battery swapping device 100. For instance, device information of the first device 20 may be stored on a platform related to a battery swapping service by registration (e.g., joining membership) of the battery swapping service of a user U of the first device 20.

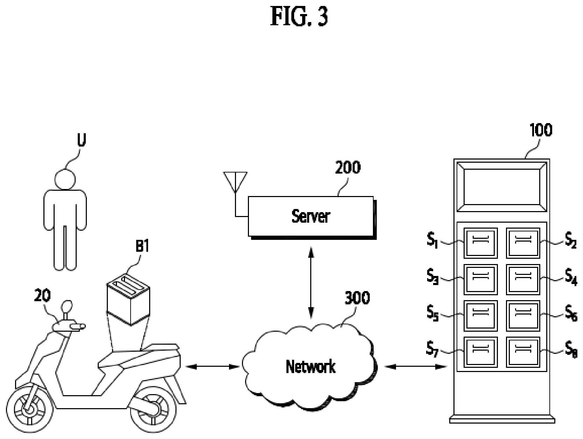

The battery swapping device 100 according to an example embodiment may correspond to a swappable battery charging station or a battery swapping station (BSS), which is used in a battery swapping service. The battery swapping device 100 may provide a battery swapping service by receiving state information of a first device indicating that the first device 20 is in a state of having stopped within a pre-defined distance from the battery swapping device 100 from the server 200. Further, the battery swapping device 100 may receive the device information of the first device 20 through Bluetooth low-energy (BLE) communication with the first device 20 and may provide a battery swapping service, which will be specifically described in FIG. 3 hereinafter.

Further, the first battery pack B1 according to an example embodiment may signify a battery pack which may supply electric power to the first device 20 by being mounted on the first device 20. The user U may separate the first battery pack B1 from the first device 20, and may receive the first battery pack B1 in a charging slot of the battery swapping device 100 to charge the first battery pack B1. A second battery pack B2 according to an example embodiment may signify a battery pack which is completely charged in a state of being stored in a charging slot of the battery swapping device 100. Nevertheless, the terms such as the first battery pack B1 and the second battery pack B2 which are used in the present disclosure are only distinguished merely depending on whether it is a circumstance in which a battery pack is received in the battery swapping device 100 to be charged or a circumstance in which a battery pack is released from the battery swapping device 100 to be swapped, and the first battery pack B1 and the second battery pack B2 are not distinguished based on a specific performance or standard. The battery swapping device 100 may be operated by being linked to the user U using the first device 20, the network 300 and the server 200, and a specific configuration of the battery swapping device 100 will be specifically described hereinafter. For the sake of convenience in description, in FIG. 1, only one of each of the user U, the battery swapping device 100 and the first device 20 is illustrated, but a plurality of users, a plurality of battery swapping devices, and a plurality of electric mobility devices may be included, and an example embodiment of the present disclosure is not limited to the particular case shown.

The server 200 according to an example embodiment may be configured to be wirelessly communicable with the battery swapping device 100 and the first device 20. The server 200 may communicate with the plurality of first devices 20 which are operated by being linked to a battery swapping service, and receive device information of the first device 20 including identification information, speed information and starting state information of the plurality of first devices 20 to use the same in a process of providing the battery swapping service. Likewise, the server 200 may be configured to be communicable with the plurality of battery swapping devices 100 which are operated by being linked to the battery swapping service. The server 200 may, through communication with the first device 20, receive location information of the first device 20. In this case, the location information of the first device 20 may include GPS information of the first device 20, and the server 200 may, through communication with the first device 20, receive the GPS information of the first device 20 according to a passage of time in a periodical manner. For instance, the server 200 may receive the GPS information of the first device 20 according to a passage of time by a predetermined time cycle such as two seconds or five seconds. For instance, the server 200 may receive the GPS information of the first device 20 according to a passage of time in a periodical manner whenever information that a change in the starting state information of the first device 20 has occurred is received.

The server 200 may, through communication with the first device 20, receive the device information of the first device 20 including at least one of the identification information of the first device 20, the speed information of the first device 20 and the starting state information of the first device 20. In this case, the identification information of the first device 20 may include unique identification information of a terminal attached to the inside of the first device 20 or built in the first device 20. In this case, the identification information of the first device 20 may be pre-registered on a database of the server 200, and, through this, the server 200 may receive and manage information related to a battery pack possession status of the battery swapping device 100 existing at a particular location to provide the battery swapping service. The server 200 may receive and manage information related to a location of the first device 20 nearby the corresponding battery swapping device 100. The speed information of the first device 20 may include information related to a current operation speed of the first device 20. In this case, the starting state information of the first device 20 may include information indicating whether an electric motor of the first device 20 is activated, currently whether the first device 20 is started, and whether the same is turned off. The server 200 may, through communication with the first device 20, receive the device information of the first device 20 according to a passage of time in a periodical manner.

The server 200 may, through communication with the battery swapping device 100, transmit information that the first device 20 is located within a pre-defined distance from the battery swapping device 100. Further, the server 200 may, through communication with the battery swapping device 100, transmit information indicating that the first device 20 is in a state of having stopped within a pre-defined distance. The server 200 may instruct the battery swapping device 100 to perform a preparation (in other words, a battery swapping preparation) for identifying whether the first battery pack B1 is located at one area of a first charging slot by transmitting the corresponding information to the battery swapping device 100.

The battery swapping device 100, the server 200 and the first device 20 may communicate with each other within the network 300. The network 300 may include a local area network (LAN), a wide area network (WAN), a value-added network (VAN), a mobile radio communication network, a satellite communication network, and a mutual combination thereof, be a comprehensive data communication network that allows each subject illustrated in FIG. 1 to communicate smoothly with each other, and include wired Internet, wireless Internet, and a mobile wireless communication network. Wireless communication may include, for example, a long-term evolution (LTE), a wireless LAN (e.g., Wireless Fidelity (Wi-Fi)), Bluetooth, Bluetooth low energy (BLE), Zigbee, Wi-Fi Direct (WFD), ultra-wideband (UWB), Infrared Data Association (IrDA), near field communication (NFC), or the like, without being limited thereto.

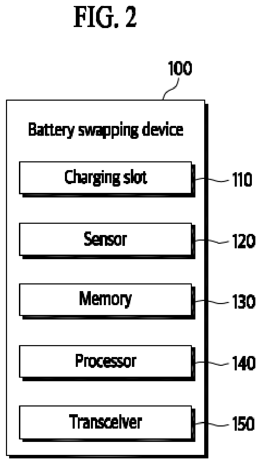

FIG. 2 is a block diagram for illustrating a configuration of a battery swapping device according to an example embodiment.

Referring to FIG. 2, the battery swapping device 100 according to an example embodiment may include a charging slot 110, a plurality of sensors 120, a memory 130, a processor 140 and a transceiver 150. In the battery swapping device 100 which is illustrated in FIG. 2, only components associated with the present example embodiment are illustrated. Therefore, it will be apparent to those of ordinary skill in the art to which the example embodiment of the present disclosure pertains that other components in general use in addition to the components illustrated in FIG. 2 may be further included.

The charging slot 110 according to an example embodiment may include a plurality of charging slots. The charging slot 110 may include a charging slot (in other words, an empty charging slot) in which a battery pack is not stored and a charging slot in which a battery pack is stored. A user may charge the first battery pack B1 by storing the first battery pack B1 which is not in a completely charged state into a charging slot in which a battery pack is not stored among the plurality of charging slots 110. In response to the user storing the first battery pack B1 in a first charging slot, the battery swapping device 100 may provide a second battery pack, which is in a completely charged state, in a charging slot in which a battery pack is stored among the plurality of charging slots 110, to the user. For the sake of convenience in description, in the present disclosure, a first charging slot may signify an empty charging slot in which a battery pack is not stored, and a second charging slot may signify a charging slot storing a battery pack which is in a completely charged state.

The plurality of sensors 120 may be arranged at one area of the plurality of charging slots 110. For instance, at least one sensor 120 may be arranged at one area of each of a plurality of charging slots. For instance, at least one sensor may be arranged at one area of a first charging slot, and the battery swapping device 100 may compare a predetermined condition to information measured through at least one sensor arranged at the one area of the first charging slot to determine whether to open a door of the first charging slot. In a case in which a battery pack according to an example embodiment is stored in a charging slot, a positive electrode terminal and a negative electrode terminal of the battery pack stored in the charging slot may be respectively electrically connected to a charging terminal of the charging slot, and the charging slot 110 may perform charging of the battery pack.

The battery swapping device 100 according to an example embodiment may include the plurality of sensors 120 which detect an operation state of the battery swapping device 100 or a state of an external environment, and generate a data value or an electric signal corresponding to the detected state. The plurality of sensors 120 according to an example embodiment may be arranged at the one area of the plurality of charging slots 110, and the one area of the plurality of charging slots 110 may signify an entrance of a charging slot. The plurality of sensors 120 according to an example embodiment may include, for instance, at least one proximity-illuminance sensor. The proximity-illuminance sensor may include a proximity sensor which decides a distance of a space in which a particular object and the proximity-illuminance sensor are located without coming in physical contact with the particular object by discharging an electromagnetic field or an electromagnetic wave and an illuminance sensor which decides an intensity of light in a space in which the proximity-illuminance sensor is located based on a resistance value which changes in a variable manner depending on an amount of received light. The battery swapping device 100 according to an example embodiment may control all the plurality of sensors 120 arranged at one area of a plurality of charging slots in an activated state. Further, the battery swapping device 100 according to an example embodiment may, for efficient electric power management in a process of providing the entire battery swapping service, control a sensor located in an empty charging slot in which the first battery pack B1 may be charged in an activated state, and control a sensor located in a charging slot storing a remaining battery pack which is in a completely charged state in a deactivated state.

The memory 130 according to an example embodiment is hardware storing various kinds of data processed in the battery swapping device 100, and the memory 130 may store data which are processed and to be processed through the processor 140 in the battery swapping device 100. Further, a memory may store not only basic programming and data structures that may provide a function of at least one example embodiment of the present disclosure, but also may store applications (programs, code modules, and instructions), drivers and the like which may provide a function of the example embodiment of the present disclosure. The memory may include a random access memory (RAM), for example, a dynamic random access memory (DRAM) and a static random access memory (SRAM), a read-only memory (ROM), an electrically erasable programmable read-only memory (EEPROM), a CD-ROM, Blu-ray or other optical disk storage, a hard disk drive (HDD), a solid state drive (SSD) or a flash memory, without being limited to the particular case mentioned in the example embodiment of the present disclosure.

According to an example embodiment, the processor 140 may control an overall operation of the battery swapping device 100 and process data and signals. The processor 140 may consist of at least one hardware unit. In addition, the processor 140 may operate by one or more software modules generated by executing program code stored in the memory 130. Because the processor 140 may include a memory, the processor 140 may control the overall operation of the battery swapping device 100 and process data and signals by executing the program code stored in the memory. The processor 140 according to an example embodiment may monitor state information of a battery pack of the plurality of charging slots 110. The state information of the battery pack may include battery identification information and/or a state parameter (e.g., a voltage, a state of charge (SoC), and a state of health (SoH)). The processor 140 may, when a particular charging slot is in a second state, monitor (estimate) an SoC and/or SoH of a battery pack stored in the corresponding charging slot based on a time series of a voltage value and/or a current value of the battery pack stored in the corresponding charging slot. A combination or any one or two or more of various known methods may be used for estimating an SoC and/or an SoH. For instance, an SoC-open circuit voltage (OCV) map, amperage counting and an extended Kalman filter and the like may be utilized for estimating an SoC of a battery pack. In the case of hardware implementation, the processor 140 according to an example embodiment may be implemented by using at least one of application specific integrated circuits (ASICs), digital signal processors (DSPs), digital signal processing devices (DSPDs), programmable logic devices (PLDs), field programmable gate arrays (FPGAs), microprocessors, and other electric units for performing a function.

According to an example embodiment, the battery swapping device 100 may include the transceiver 150 for performing wireless communication. The battery swapping device 100 may communicate with an external electronic device (e.g., the first device 20 or the server 200) by using the transceiver 150. The transceiver 150 may be configured to access the server 200 located at a remote place from the battery swapping device 100 through the network 300 to transmit and receive information related to a battery swapping service to and from the server 200.

Communication technologies used by the transceiver 150 may include an LTE communication technology. For instance, the transceiver 150 may use the LTE communication technology in a process of performing communication between the battery swapping device 100 and the server 200. The battery swapping device 100 may receive information that the first device 20 is located within a pre-defined distance from the battery swapping device 100 from a server through the transceiver 150, and may receive information indicating that the first device 20 is in a state of having stopped within a pre-defined distance from a server through a transceiver. The battery swapping device 100 may receive location information of the first device 20 and device information of the first device 20 from the server 200 through the transceiver 150. The battery swapping device 100 may, based on the location information of the first device 20, decide whether the first device 20 is located within a predefined distance from the battery swapping device 100. The battery swapping device 100 may, based on the device information of the first device 20, decide whether the first device 20 has stopped within a pre-defined distance from the battery swapping device 100.

Communication technologies used by the transceiver 150 may include a Bluetooth low energy (BLE) communication technology. For instance, the transceiver 150 may use the BLE communication technology in a process of performing communication between the battery swapping device 100 and the first device 20. The battery swapping device 100 may receive a first signal for communication connection broadcasted by the first device 20 through the transceiver 150, and decide, based on the received first signal, that the first device 20 is located within a pre-defined distance from the battery swapping device 100. The battery swapping device 100 may receive a second signal including the device information of the first device 20 from the first device 20 through the transceiver 150, and decide, based on the device information of the first device 20, that the first device 20 is in a state of having stopped within a pre-defined distance from the battery swapping device 100.

Further, communication technologies used by the transceiver 150 may include global system for mobile communication (GSM), code division multi access (CDMA), 5G, wireless LAN (WLAN), wireless-fidelity (Wi-Fi), Bluetooth^{™}, radio frequency identification (RFID), infrared data association (IrDA), ZigBee, near field communication (NFC) and the like.

The battery swapping device 100 according to an example embodiment may further include a display (not illustrated) displaying description and guidance with respect to an overall swapping process of a battery pack to the user U. The display according to an example embodiment may display state information of a plurality of charging slots and information such as words for guiding receiving and releasing a battery in order for a user to smoothly use a battery swapping service.

Methods implemented as software modules or algorithms are computer-readable codes or program instructions executable on processor 203, and may be stored on a computer-readable recording medium. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network in order for computer-readable codes to be stored and executed in a dispersed manner. A medium may be read by a computer, stored in the memory 130, and executed in the processor 140.

FIG. 3 is a drawing for illustrating a process of deciding a state of a first device according to an example embodiment.

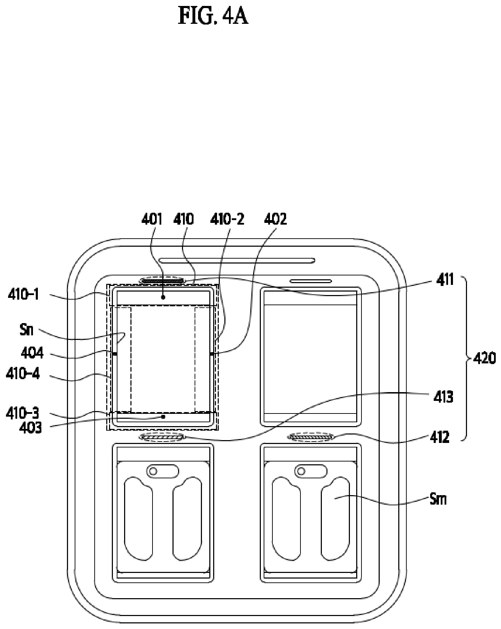

Referring to FIG. 3, the battery swapping device 100 according to an example embodiment may include a plurality of charging slots S₁ to S₈. Each of the plurality of charging slots S₁ to S₈ may be provided in order for a battery pack to be stored and ejected. Each of the plurality of charging slots S₁ to S₈ may correspond to a first state which is a state in which, for instance, the first battery pack B1 may be stored because a battery pack does not exist in a charging slot, and may correspond to a second state which is a state in which, for instance, a battery pack which is completely charged or a battery pack which is being charged such as a second battery pack (not illustrated) exists in a charging slot. The first battery pack B1 and the second battery pack which may be used in the battery swapping device 100 according to an example embodiment may be stored in a charging slot of the battery swapping device 100, and may have been regularized and standardized to have a specification to be normally chargeable by charging electric power supplied by the battery swapping device 100 in a state of being stored in a charging slot. Hereinafter, the second battery pack and a structure of the plurality of charging slots S₁ to S₈ included in the battery swapping device 100 will be described in detail in FIG. 4a to FIG. 4c.

FIG. 3 illustrates that, for the sake of convenience in description, the battery swapping device 100 has the charging slots S₁ to S₈ which are eight in total. The battery swapping device 100 according to an example embodiment may be controlled in order to manage two charging slots which are adjacent to each other in a left-and-right direction among the eight charging slots in total in the first state, for instance. The numbers and arrangement locations of a plurality of charging slots included in the battery swapping device 100 are not limited to the example embodiment illustrated in FIG. 3, and the number of the plurality of charging slots may be less than eight or more than eight, and an arrangement location of a charging slot to be managed in the first state on the battery swapping device 100 may be changed to be various.

The battery swapping device 100 according to an example embodiment may receive information that the first device 20 is located within a pre-defined distance from the battery swapping device 100 from the server 200. The information that the first device 20 is located within the pre-defined distance from the battery swapping device 100 may be information transmitted to the first device 20 after having been generated in a case in which the server 200 has decided a distance between the first device 20 and the battery swapping device 100 based on GPS information of the first device 20 and GPS information of the battery swapping device 100 and decided that the corresponding distance is within the pre-defined distance. The battery swapping device 100 may receive information indicating that the first device 20 is in a state of having stopped within a pre-defined distance from the battery swapping device 100 from the server 200. The information indicating that the first device 20 is in the state of having stopped within the pre-defined distance from the battery swapping device 100 may be information transmitted to the first device 20 after having been generated in a case in which the server 200 has decided whether the first device 20 is started and whether the same is turned off, and has decided based on a degree of change of the GPS information of the first device 20 according to a passage of time. For instance, processes of the battery swapping device 100 receiving the information that the first device 20 is located within the pre-defined distance from the battery swapping device 100 and receiving the information indicating that the first device 20 is in the state of having stopped within the pre-defined distance from the battery swapping device 100 from the server 200 may be performed based on LTE communication.

The battery swapping device 100 according to an example embodiment may receive location information of the first device 20 and device information of the first device 20 from the server 200. For instance, the battery swapping device 100 may decide, based on the location information of the first device 20, whether the first device 20 is located within the pre-defined distance from the battery swapping device 100. For instance, the battery swapping device 100 may, by comparing GPS information included in the location information of the first device 20 to the GPS information of the battery swapping device 100, decide whether the first device 20 exists within the pre-defined distance from the battery swapping device 100. For instance, the battery swapping device 100 may, based on the device information of the first device 20, decide whether the first device 20 has stopped within the pre-defined distance from the battery swapping device 100. For instance, in a case in which a variation of the GPS information included in the location information of the first device 20 during a predetermined time section is decided to be less than a threshold value, the battery swapping device 100 may decide that the first device 20 is in a stopped state. The battery swapping device 100 may decide, based on the device information of the first device 20 including information indicating whether the first device 20 is started and whether the same is turned off, that the first device 20 is in a stopped state.

The battery swapping device 100 according to an example embodiment may perform communication with the first device 20 based on BLE communication, and decide whether the first device 20 has stopped within a pre-defined distance without communication with the server 200. For instance, the battery swapping device 100 may receive a first signal for communication connection broadcasted by a first device. The first signal may be a signal transmitted to a device existing within a BLE communicable distance for the first device 20 to begin BLE communication. The battery swapping device 100 may, based on the received first signal, decide that the first device 20 is located within a pre-defined distance from the battery swapping device 100. For instance, the battery swapping device 100 may receive the first signal from the first device 20, and, based on a received signal strength indicator (RSSI) of the first signal, decide that the first device 20 is located within a pre-defined distance from the battery swapping device 100. The battery swapping device 100 may receive a second signal including the device information of the first device 20 from the first device 20, and decide, based on the device information of the first device 20, that the first device 20 is in a state of having stopped within a pre-defined distance from the battery swapping device 100. In a case of BLE communication, because communication between the battery swapping device 100 and the first device 20 is performed in a relatively short distance compared to LTE communication, the battery swapping device 100 may execute a decision that, based on data existing on a memory of the battery swapping device 100 without communication with the server 200, the first device 20 which is pre-registered on a platform related to a battery swapping service is in a state of having stopped within a pre-defined distance from the battery swapping device 100.

The battery swapping device 100 according to an example embodiment may, in a case in which the first device 20 is in a state of having stopped and in a case in which the same is decided to be in a stopped state within a pre-defined distance from the battery swapping device 100, in order to prepare for battery swapping, compare a predetermined condition to information measured through at least one sensor, and specific description in relation thereto will be provided through FIG. 4a to FIG. 4c.

FIG. 4a to FIG. 4c are drawings for illustrating a process of a battery swapping device controlling a charging slot for swapping a battery pack according to an example embodiment.

Referring to FIG. 4a, a structure of a charging slot included in the battery swapping device 100 may be identified according to an example embodiment. In FIG. 4a, for the sake of convenience in description, only four charging slots of the battery swapping device 100 are illustrated, but this is for the sake of convenience in description, and, as described above, the number of the charging slots is not limited to a particular case.

At one area 410 of a first charging slot Sn according to an example embodiment, a plurality of sensors (e.g., a first sensor 401 to a fourth sensor 404) may be arranged, and the plurality of sensors may include at least one proximity-illuminance sensor. In this case, the one area 410 of the first charging slot Sn may correspond to an entrance area of a charging slot. The one area 410 of the first charging slot Sn may include a first area 410-1, a second area 410-2 arranged to be connected to the first area 410-1, a third area 410-3 arranged to be connected to the second area 410-2, and to face the first area, and a fourth area 410-4 arranged to be connected to the third area 410-3 and to face the second area 410-2. The first area 410-1 and the second area 410-2, the second area 410-2 and the third area 410-3, and the third area 410-3 and the fourth area 410-4 may be respectively connected to be perpendicular to each other, may be connected to adjoin each other, and may be connected to intersect with each other. The one area 410 of the first charging slot Sn according to an example embodiment may include pilot lights 420 indicating an internal state of the first charging slot Sn. The pilot lights 420 may display colors, for instance, a first color (e.g., a white color) indicating a first state which is a state in which a battery pack does not exist in the first charging slot Sn such as a pilot light 411, a second color (e.g., a green color) indicating a 2-1 state which is a state in which a battery which is completely charged exists in a second charging slot Sm such as a pilot light 412, and a third color (e.g., an orange color) indicating a 2-2 state which is a state in which a battery pack which is being charged exists in a charging slot such as a pilot light 413. The plurality of sensors according to an example embodiment may include the first sensor 401, a second sensor 402, a third sensor 403 and the fourth sensor 404 included in the one area 410 of the first charging slot Sn. Information measured through the first sensor 401, the second sensor 402, the third sensor 403 and the fourth sensor 404 may be acquired from information measured through at least one proximity-illuminance sensor included in each sensor. Information measured through at least one sensor may include brightness information and distance information to the first battery pack B1, which are measured by each of at least one proximity-illuminance sensor. Each proximity-illuminance sensor may have been fabricated not to receive the brightness information and the distance information to the first battery pack B1 in each of at least one proximity-illuminance sensor which is mentioned in a case in which a battery pack is an object of a different material, due to having been fabricated to respond to only a particular portion of the battery pack made of a particular material in consideration of a material of the battery pack which is regularized and standardized.

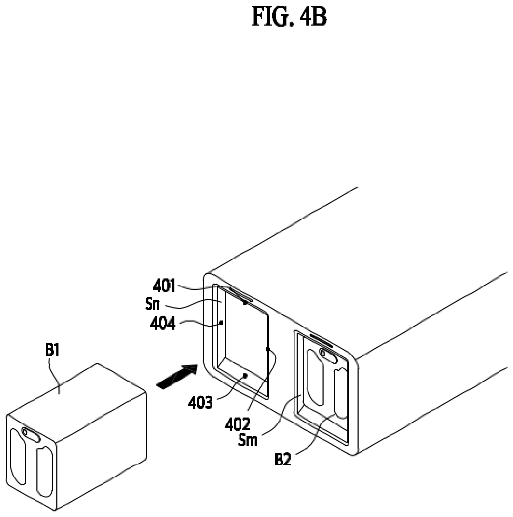

Referring to FIG. 4b, the battery swapping device 100 according to an example embodiment may, after it is identified whether the first device 20 is in a state of having stopped within a pre-defined distance from the battery swapping device 100 through the process as described in FIG. 3, with respect to each of at least one proximity-illuminance sensor, compare predetermined reference brightness information and reference distance information respectively to measured brightness information and distance information. The predetermined reference brightness information and reference distance information may be as the following Table 1, for instance.

**[Table 1]**

| | Reference distance information | Reference brightness information |
|---|---|---|
| Proximity-illuminance sensor 1 | Within 1 millimeter (mm) | Within 0.7lux |
| Proximity-illuminance sensor 2 | Within 0.8mm | Within 0.5lux |
| Proximity-illuminance sensor 3 | Within 0.5mm | Within 0.4lux |
| ··· | ··· | ··· |
| Proximity-illuminance sensor N | Within Xmm | Within Ylux |

As in Table 1, in a proximity-illuminance sensor included in each of the sensors (e.g., the first sensor 401, the second sensor 402, the third sensor 403, and the fourth sensor 404), predetermined reference distance information may be set to be different from each other. Further, as the predetermined reference distance information decreases in the proximity-illuminance sensor included in each of the sensors (e.g., the first sensor 401, the second sensor 402, the third sensor 403, and the fourth sensor 404), predetermined reference brightness information may decrease.

According to an example embodiment, in order for the first battery pack B1 to be naturally inserted, a tolerance may exist in an inner structure of the first charging slot Sn, and, because of a characteristic of the first battery pack B1 having a standardized weight, when the first battery pack B1 of the first charging slot Sn is inserted, the first battery pack B1 may be located to be close to a lower end area (e.g., the third area 410-3) in the one area 410 of the first charging slot Sn. For instance, a proximity-illuminance sensor included in the third sensor 403 located at a lower end area of the first charging slot Sn may acquire distance information closer to a lower end area of the first battery pack B1 and a proximity-illuminance sensor included in the first sensor 401 in an upper end area (e.g., the first area 410-1) in the one area 410 of the first charging slot Sn may acquire distance information which is farther from an upper end area of the first battery pack B1. Based on a characteristic caused by a physical shape of the first charging slot Sn and the first battery pack B1, the battery swapping device 100 may decide whether a predetermined condition is satisfied by comparing distance information to the first battery pack B1 measured through the proximity-illuminance sensor of each of the sensors (e.g., the first sensor 401, the second sensor 402, the third sensor 403, and the fourth sensor 404) to the predetermined reference distance information, and comparing brightness information to the predetermined reference brightness information respectively.

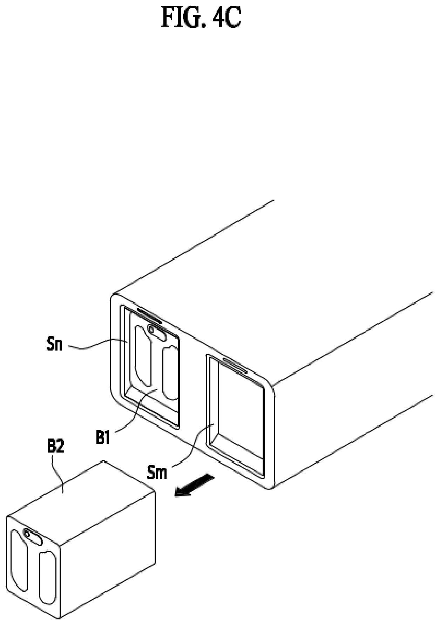

Based on whether the number of one or more proximity-illuminance sensors satisfying the predetermined condition is equal to or greater than a predetermined number, the battery swapping device 100 may determine whether the first battery pack is located at the one area 410 of the first charging slot Sn. The predetermined number may be changed according to setting of the battery swapping device 100. For instance, when, at a proximity-illuminance sensor (e.g., the first sensor 401), distance information to the first battery pack B1 is 0.9mm and brightness information is 0.6lux, the proximity-illuminance sensor (e.g., the first sensor 401) may be considered to satisfy reference brightness information of each proximity-illuminance sensor according to reference distance information to the first battery pack B1 at each proximity-illuminance sensor in Table 1. As another example, when, at the proximity-illuminance sensor (e.g., the first sensor 401), distance information to the first battery pack B1 is 0.9mm and brightness information is 0.8lux, the proximity-illuminance sensor (e.g., the first sensor 401) may be considered not to satisfy reference brightness information of each proximity-illuminance sensor according to reference distance information to the first battery pack B1 at each proximity-illuminance sensor in Table 1. In such a manner, when the number of proximity-illuminance sensors of which a result of comparing satisfies the predetermined condition among the proximity-illuminance sensors included in each of the sensors (e.g., the first sensor 401, the second sensor 402, the third sensor 403, and the fourth sensor 404) is equal to or greater than the predetermined number (e.g., three), the battery swapping device 100 may decide that information measured through the sensors (e.g., the first sensor 401, the second sensor 402, the third sensor 403, and the fourth sensor 404) satisfies the predetermined condition, and may decide that the first battery pack B1 is located at the one area 410 of the first charging slot Sn. When the number of the proximity-illuminance sensors of which the result of the comparing satisfies the predetermined condition is less than the predetermined number, the battery swapping device 100 may decide that the first battery pack is not located at the one area 410 of the first charging slot Sn. Unlike in FIG. 4a, to simplify the drawings, in FIG. 4b and FIG. 4c, the first charging slot Sn and the second charging slot Sm are illustrated to be adjoining beside each other, but the example embodiments of the present disclosure are not limited to the case shown.

The battery swapping device 100 according to an example embodiment may, when the information measured through the sensors (e.g., the first sensor 401, the second sensor 402, the third sensor 403, and the fourth sensor 404) included in a sensor satisfies the predetermined condition, decide that the first battery pack B1 is located at the one area 410 of the first charging slot Sn, and may open a door of the first charging slot Sn. In this case, the door of the first charging slot Sn may be formed by coming in contact with any one area of the first area 410-1 to the fourth area 410-4 included in the one area 410, and may be formed to open the first charging slot Sn when the door is opened by having the corresponding any one area as an axis, and to close the first charging slot Sn when the door is closed. For instance, the door of the first charging slot Sn may be opened in a case in which the first battery pack B1 is located at the one area 410 of the first charging slot Sn by having the first area 410-1 included in the one area 410 as an axis, and may continuously maintain an opened state after the first battery pack B1 is received in the first charging slot Sn. The first battery pack B1 received in the first charging slot Sn may be fixed on the inside of the first charging slot Sn by a fixing device (e.g., a hook).

The battery swapping device 100 according to an example embodiment may, when the information measured through the sensors (e.g., the first sensor 401, the second sensor 402, the third sensor 403, and the fourth sensor 404) included in the sensor does not satisfy the predetermined condition, decide that the first battery pack B1 is not located at the one area 410 of the first charging slot Sn, and may close the door of the first charging slot Sn. In this case, the closing of the door of the first charging slot Sn may include all of an operation of closing the first charging slot Sn in a circumstance in which the first charging slot Sn is opened and an operation of maintaining a closed state of the first charging slot Sn in a circumstance in which the first charging slot Sn is closed.

The battery swapping device 100 according to an example embodiment may, in a case in which the first battery pack B1 is identified to have been normally received after the door of the first charging slot Sn is opened, charge the first battery pack B1. The first battery pack B1 being identified to have been normally received may signify a circumstance in which various parameters including an SoC and an SoH of the first battery pack B1 are acquired through communication with a battery management system (BMS) of the first battery pack B1, and in which a state of the first battery pack B1 identified through communication with the server 200 corresponds to a normal state. For instance, based on a time series of a voltage value and/or a current value of the first battery pack B1 stored in the first charging slot Sn, the battery swapping device 100 may monitor (estimate) an SoC and/or an SoH of the first battery pack B1 stored in the first charging slot Sn. For estimating the SoC and/or the SoH, an SoC-OCV map, amperage counting, an extended Kalman filter and the like may be utilized, and the battery swapping device 100 may decide whether the first battery pack B1 is in the normal state through communication with the server 200. In this case, the normal state may signify, for instance, a state whether an operation performance of the first battery pack B1 identified based on a parameter related to an SoC, an SoH, a voltage, a current, and a temperature of the first battery pack B1 or an operation performance of the first battery pack B1 when being completely charged exists within a critical range adequate for operating the first device 20.

Referring to FIG. 4c, the battery swapping device 100 according to an example embodiment may, in a case in which the first battery pack B1 is identified to have been normally received after the first charging slot Sn is opened, determine the second battery pack B2 based on state information of each of a plurality of battery packs received in one portion of a plurality of charging slots, and may control the second charging slot Sm at which the second battery pack B2 is located in order to release the second battery pack B2. For instance, in a case in which a plurality of battery packs exist in the charging slot S₁ to the charging slot Sm before the first battery pack B1 is received, the battery swapping device 100 may determine a battery pack with a highest SoC among the plurality of battery packs as the second battery pack B2. In a case in which the second battery pack B2 is released by the user U after the second charging slot Sm into which the second battery pack B2 is received is opened, the battery swapping device 100 according to an example embodiment may close a door of the second charging slot Sm. Afterwards, the battery swapping device 100 may provide a battery swapping service to the various users U through a process of controlling the second charging slot Sm corresponding to the first state in a similar manner as controlling the first charging slot Sn in the entire battery swapping process which is described above.

In FIG. 4a to FIG. 4b, although it is expressed that the sensors (e.g., the first sensor 401, the second sensor 402, the third sensor 403, and the fourth sensor 404) including at least one proximity-illuminance sensor exist only in the first charging slot Sn in which the first battery pack B1 is to be stored, and it is expressed that only four proximity-illuminance sensors exist on the one area 410 of the first charging slot Sn, in a case in which, according to an example embodiment, the first battery pack B1 is received in the first charging slot Sn to be charged before becoming the second battery pack B2, the corresponding first charging slot Sn may identically function in a process of providing a battery swapping service with the second charging slot Sm, and the number of the plurality of proximity-illuminance sensors and the numbers and locations by and at which the plurality of proximity-illuminance sensors are located on the one area 410 of a charging slot may also vary, and thus, the example embodiments of the present disclosure are not limited to the case described based on the drawings.

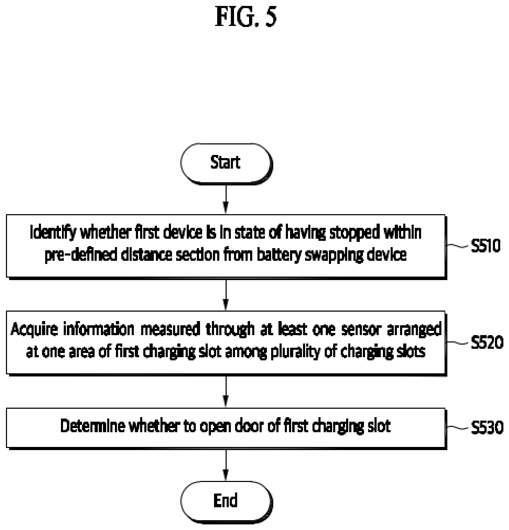

FIG. 5 is a drawing for illustrating a controlling method of a battery swapping device according to an example embodiment.

Referring to FIG. 5, the battery swapping device 100 according to an example embodiment may, based on the location information of the first device 20 and the device information of the first device 20 in operation S510, identify whether the first device 20 is in a state of having stopped within a pre-defined distance from the battery swapping device 100. The battery swapping device 100 according to an example embodiment may receive the information that the first device 20 is located within the pre-defined distance from the battery swapping device 100 from the server 200, and may receive the information indicating that the first device 20 is in the state of having stopped within the pre-defined distance from the server as described in FIG. 3. Furthermore, the battery swapping device 100 may receive the location information of the first device 20 and the device information of the first device 20 from the server 200 to compare the GPS information included in the location information including latitude, longitude, and altitude of the first device 20 to the GPS information including latitude, longitude, and altitude of the battery swapping device 100 and may, based on a variation of the GPS information included in the location information of the first device 20 during the predetermined time section, identify that the first device 20 is in the state of having stopped within the pre-defined distance from the battery swapping device 100. Furthermore, the battery swapping device 100 may decide, based on the device information of the first device 20 including the information indicating whether the first device 20 is started and whether the same is turned off, that the first device 20 is in a stopped state.

Furthermore, the battery swapping device 100 may, based on the first signal and the second signal which are described above, perform communication between the battery swapping device 100 and the first device 20, and may execute the decision that the first device 20 is in the state of having stopped within the pre-defined distance from the battery swapping device 100.

The battery swapping device 100 according to an example embodiment may acquire information measured through at least one sensor arranged at one area of a first charging slot among a plurality of charging slots in operation S520. In this case, the at least one sensor may have been arranged at one area of a charging slot as described in FIG. 4a. The one area of the charging slot may signify an entrance of the charging slot, and information measured through at least one proximity-illuminance sensor included in the at least one sensor may include brightness information and distance information to the first battery pack measured by each of the at least one proximity-illuminance sensor. In a case in which the information measured through the at least one sensor satisfies the predetermined condition as described in FIG. 4b, the battery swapping device 100 may decide that the first battery pack B1 is located at the one area of the first charging slot.

The battery swapping device 100 according to an example embodiment may, based on a result of the comparing in operation S530, determine whether to open a door of the first charging slot. The battery swapping device 100 may, in a case in which the first battery pack B1 is decided to be located at the one area of the first charging slot in operation S530, open the door of the first charging slot. The battery swapping device 100 may, in a case in which the first battery pack B1 is decided not to be located at the one area of the first charging slot in operation S530, close the door of the first charging slot. After then, in a case in which the first battery pack B1 is identified to have been normally received after the door of the first charging slot is opened as described above in FIG. 4c, the battery swapping device 100 may charge the first battery pack B1. Furthermore, the battery swapping device 100 may, in a case in which the first battery pack B1 is identified to have been normally received after the first charging slot is opened, determine the second battery pack B2 based on state information of each of a plurality of battery packs received in one portion of a plurality of charging slots, and may control a second charging slot at which the second battery pack B2 is located in order to release the second battery pack B2. The battery swapping device 100 may, in a case in which the second battery pack B2 is released after a door of the second charging slot is opened, perform a process of closing the door of the second charging slot.

The present example embodiments may be represented by functional block configurations and various processing steps. These functional blocks may be implemented by various numbers of hardware and/or software configurations that execute specific functions. For example, the example embodiments may adopt integrated circuit configurations such as a memory, a processor, a logic circuit, and a look-up table that may execute various functions by control of one or more microprocessors or other control devices. Similar to that components may be executed by software programming or software elements, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing. The terms "mechanism", "element", "means", and "configuration" may be widely used and are not limited to mechanical and physical configurations. The terms may include the meaning of a series of routines of software in association with a processor or the like.

The above-described example embodiments are merely examples, and other example embodiments may be implemented within the scope of the claims described.

## Claims

1. A battery swapping device comprising:
a plurality of charging slots;
a transceiver;
a plurality of sensors arranged at one area of the plurality of charging slots;
a memory storing an instruction; and
a processor connected to the memory,
wherein the processor is configured to:
identify, based on at least one of location information of a first device and device information of the first device, whether the first device is in a state of having stopped within a pre-defined distance from the battery swapping device;
acquire, in a case in which the first device is in the state of having stopped within the pre-defined distance from the battery swapping device, information measured through at least one sensor arranged at one area of a first charging slot among the plurality of charging slots; and
determine, based on the information measured through the at least one sensor, whether to open a door of the first charging slot.

2. The battery swapping device of claim 1, wherein the processor is configured to:
receive information that the first device is located within the pre-defined distance from the battery swapping device from a server through the transceiver; and
receive information indicating that the first device is in the state of having stopped within the pre-defined distance from the server through the transceiver.

3. The battery swapping device of claim 1, wherein the processor is configured to:
receive a first signal for a communication connection broadcasted by the first device through the transceiver;
decide, based on the received first signal, that the first device is located within the pre-defined distance from the battery swapping device;
receive a second signal including the device information of the first device from the first device through the transceiver; and
decide, based on the device information of the first device, that the first device is in the state of having stopped within the pre-defined distance from the battery swapping device.

4. The battery swapping device of claim 1, wherein the processor is configured to:
receive the location information of the first device and the device information of the first device from a server through the transceiver;
decide, based on the location information of the first device, whether the first device is located within the pre-defined distance from the battery swapping device; and
decide, based on the device information of the first device, whether the first device has stopped within the pre-defined distance from the battery swapping device.

5. The battery swapping device of claim 1, wherein the one area of the first charging slot comprises:
a first area;
a second area arranged to be connected to the first area;
a third area arranged to be connected to the second area, and to face the first area; and
a fourth area arranged to be connected to the first area and the third area, and to face the second area,
wherein the at least one sensor comprises:
a first sensor located in the first area;
a second sensor located in the second area;
a third sensor located in the third area; and
a fourth sensor located in the fourth area.

6. The battery swapping device of claim 1, wherein the at least one sensor
comprises at least one proximity-illuminance sensor, and
wherein the information measured through the at least one sensor comprises brightness information and distance information to a first battery pack, which are measured by each of the at least one proximity-illuminance sensor.

7. The battery swapping device of claim 6, wherein the processor is configured to:
compare, with respect to each of the at least one proximity-illuminance sensor, predetermined reference brightness information and reference distance information respectively to measured brightness information and distance information;
decide, with respect to each of the at least one proximity-illuminance sensor, whether a result of the comparing satisfies a predetermined condition; and
decide, based on whether a number of the at least one proximity-illuminance sensor satisfying the predetermined condition is equal to or greater than a predetermined number, whether the first battery pack is located at the one area of the first charging slot.

8. The battery swapping device of claim 7, wherein the processor is configured to, in a case of having decided that the first battery pack is located at the one area of the first charging slot, open the door of the first charging slot.

9. The battery swapping device of claim 7, wherein the processor is configured to, in a case of having decided that the first battery pack is not located at the one area of the first charging slot, close the door of the first charging slot.

10. The battery swapping device of claim 1, wherein the processor is configured to, in a case of having identified that a first battery pack is normally received after the door of the first charging slot is opened, charge the first battery pack.

11. The battery swapping device of claim 1, wherein the processor is configured to:
determine, in a case of having identified that a first battery pack is normally received after the door of the first charging slot is opened, a second battery pack based on state information of each of a plurality of battery packs received in a portion of the plurality of charging slots; and
control a second charging slot at which the second battery pack is located to release the second battery pack.

12. The battery swapping device of claim 11, wherein the processor is configured to, in a case in which the second battery pack is released, close a door of the second charging slot.

13. The battery swapping device of claim 1, wherein the device information of the first device comprises at least one of:
identification information of the first device;
speed information of the first device; and
starting state information of the first device,
wherein the identification information of the first device is pre-registered on a database of a server.

14. A controlling method of a battery swapping device, comprising:
identifying, based on at least one of location information of a first device and device information of the first device, whether the first device is in a state of having stopped within a pre-defined distance from the battery swapping device;
acquiring, in a case in which the first device is in the state of having stopped within the pre-defined distance from the battery swapping device, information measured through at least one sensor arranged at one area of a first charging slot among a plurality of charging slots; and
determining, based on the information measured through the at least one sensor, whether to open a door of the first charging slot.

15. A non-transitory computer-readable recording medium having a program for executing the controlling method of the battery swapping device of claim 14 on an electronic device.
